# EUROPEAN PATENT APPLICATION

(11) **EP 1 885 123 A2**
(43) Date of publication of application: **06.02.2008**
(21) Application number: 07252609.8
(22) Date of filing: 27.06.2007
(51) Int. Cl.: H04N 5/445

(54) **Broadcast receiving apparatus**

(30) Priority: 02.08.2006 JP 2006210633
(71) Applicant: Hitachi, Ltd., Chiyoda-ku Tokyo 100-8280 (JP)
(72) Inventor: Furui, Maki c/o Hitachi, Ltd., IP Group, 12th Floor, Chiyoda-ku, Tokyo 100-8220 (JP); Moriya, Toshiyuki c/o Hitachi, Ltd., IP Group, 12th Floor, Chiyoda-ku, Tokyo 100-8220 (JP); Itagaki, Tsuguo c/o Hitachi, Ltd., IP Group, 12th Floor, Chiyoda-ku, Tokyo 100-8220 (JP); Paolantonio, Sergio c/o Hitachi, Ltd., IP Group, 12th Floor, Chiyoda-ku, Tokyo 100-8220 (JP)
(74) Representative: Calderbank, Thomas Roger

(57) **Abstract**

An object of the present invention is to provide a broadcast receiving apparatus making it possible to switch a program picture being displayed to another in a user-friendly manner. The broadcast receiving apparatus includes a tuner unit, a display unit on which a program picture is displayed, an input unit including multiple channel operational buttons, and a control unit that controls these units on a centralized manner. When any of the channel operational buttons is touched, the input unit generates a first operational signal. When the channel operational button is depressed, the input unit generates a second operational signal. When the control unit detects the first operational signal during display of the program picture on the display unit, the control unit displays, on the display unit, program information signified by the first operational signal together with the program picture being displayed. When the control unit detects the second operational signal after detecting the first operational signal, the control unit switches the program picture being displayed to a program picture signified by the second operational signal.

## Description

The present invention relates to a broadcast receiving apparatus. Particularly, the present invention is suitable for a broadcast receiving apparatus making it possible to switch program pictures to be displayed by manipulating channel operational buttons.

In recent years, digital broadcasts in multiple broadcasting modes such as a terrestrial digital broadcasting mode, a broadcasting satellite (BS) digital broadcasting mode, and a communications satellite (CS) digital broadcasting mode have prevailed. Various digital broadcast receiving apparatuses have been realized. However, when a viewer is enjoying a program picture on a certain channel, if the viewer is concerned about programs broadcasted on the other channels, the viewer has to manipulate channel operational buttons on a remote control so as to switch channels, suspend the program picture being viewed, and surf the program pictures on the other channels. This is quite inconvenient.

A proposal has been made of a digital broadcast receiving apparatus that includes a remote control having a program information operational button for use in displaying program information, a cursor movement operational key, and a decision key, that when the program information operational button on the remote control is manipulated during display of a program picture on a display unit, displays program information, and that when the cursor movement operational key and decision key are manipulated, selects a desired program from the program information and displays the program picture. As this type of conventional digital broadcast receiving apparatus, first to third related arts described below are presented.

In the first related art, when the program information operational button is manipulated during display of a program picture, a program listing is, as shown in Fig. 29, displayed on an entire display screen. In this state, when the cursor movement operational key are manipulated, a cursor in the program listing is, as shown in Fig. 30, moved in order to select a desired program. In this state, when the decision key is manipulated, the picture of the selected program is, as shown in Fig. 31, displayed on the entire screen of the display unit.

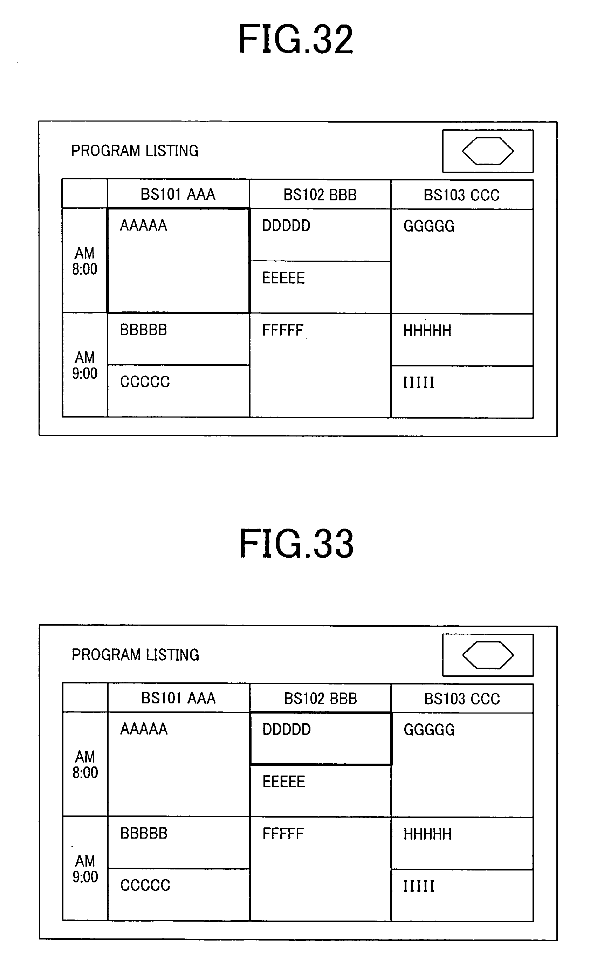

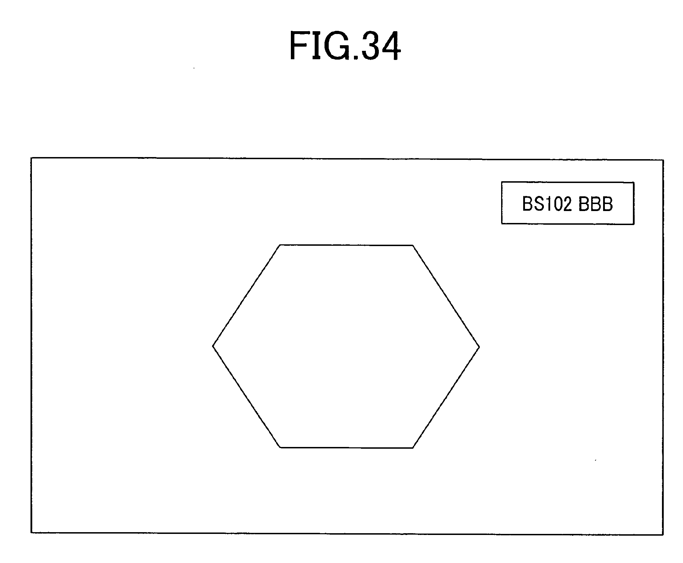

In the second related art, when the program information operational button is manipulated during display of a program picture, the program listing is, as shown in Fig. 32, displayed on the entire display screen, and a program picture being viewed is displayed on part of the display screen. In this state, when the cursor movement operational key is manipulated, the cursor is, as shown in Fig. 33, moved in the program listing in order to select a desired program. In this state, when the decision key is manipulated, the picture of the selected program is, as shown in Fig. 34, displayed on the entire screen of the display unit.

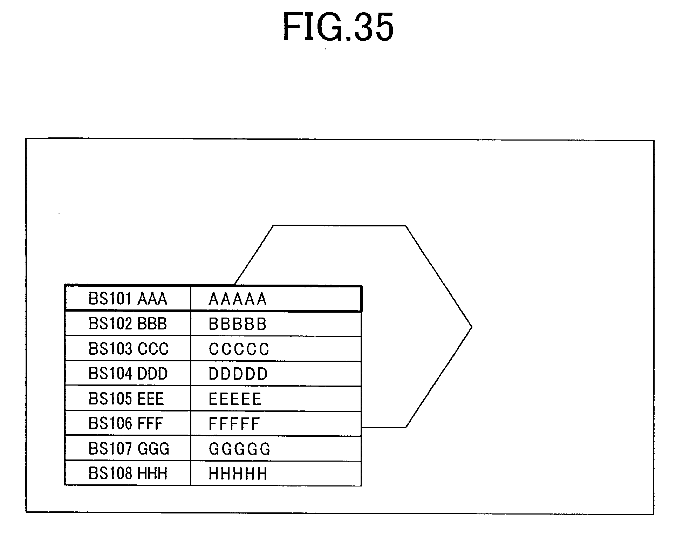

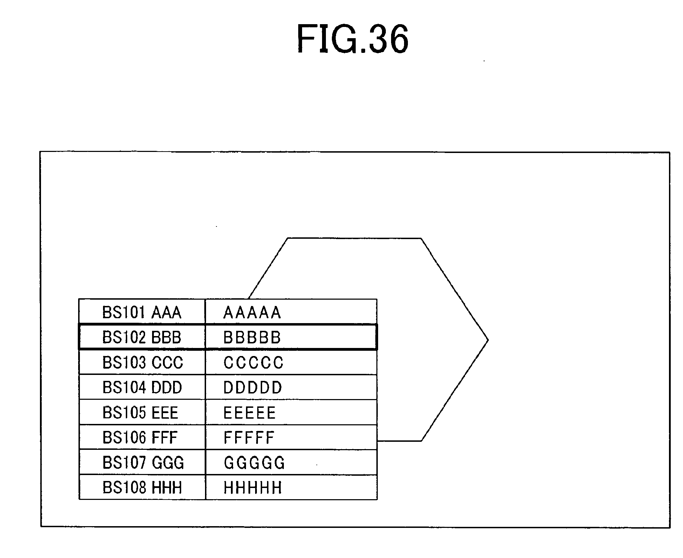

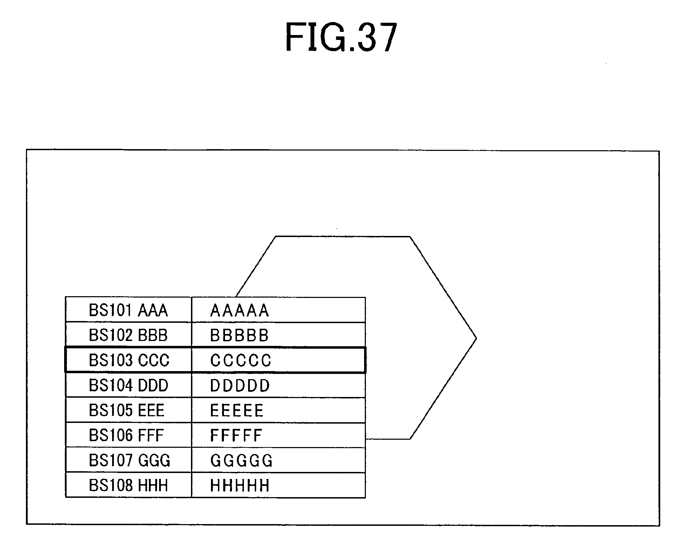

In the third related art, when the program information operational button is manipulated during display of a program picture, the program picture is displayed on the entire display screen, and the program listing is, as shown in Fig. 35, displayed on part of the program picture. In this state, when the cursor movement operational key is manipulated, the cursor is, as shown in Fig. 36 and Fig. 37, moved step by step in the program listing in order to select a desired program. In this state, when the decision key is manipulated, the picture of the selected program is displayed.

As a patent document relevant to the conventional digital broadcast receiving apparatus, Japanese Patent Laid-Open No. 2005-244779 is taken for instance.

According to the foregoing first to third related arts, when program information is browsed in order to display the picture of a desired program, three keys that are the program information operational button, cursor movement operational key, and decision key have to be manipulated mutually independently. Moreover, the operational buttons on the hand-held remote control have to be identified and manipulated many times. This cannot be said to be user-friendly. Moreover, since the program information occupies a major portion of the screen, a program picture being viewed cannot be satisfactorily continuously enjoyed.

A preferred aim of the present invention is to provide a broadcast receiving apparatus making it possible to switch a program picture being displayed to another in a user-friendly manner during display of the program picture while continuously viewing the program picture.

The present invention provides a broadcast receiving apparatus including a tuner unit, a display unit on which a program picture is displayed, an input unit that includes multiple channel operational buttons, and a control unit that controls the other units on a centralized manner. Herein, when any of the channel operational buttons is touched, the input unit generates a first operational signal. When the channel operational button is depressed, the input unit generates a second operational signal. If the control unit detects the first operational signal during display of a program picture on the display unit, the control unit displays, on the display unit, program information, which is signified by the first operational signal, together with the program picture being displayed. When the control unit detects the second operational signal after detecting the first operational signal, the control unit switches the program picture to a program picture signified by the second operational signal.

Preferable concrete examples of constituent features of the present invention will be described below.
(1) When the control unit detects the first operational signal during display of a program picture on the entire display screen of the display unit, the control unit displays program information, which is signified by the first operational signal, on part of the program picture being displayed.
(2) When the control unit detects the first operational signal, the control unit displays on the display unit channel button information together with program information signified by the first operational signal.
(3) In the case (2), the multiple channel operational buttons are arrayed in the form of a lattice. The channel button information is displayed on the display unit while including channel image buttons that are arrayed in the same form of a lattice as the multiple channel operational buttons are. A channel image button signified by the first operational signal and a channel image button relevant to the program picture being displayed are displayed on the display unit so that they can be discriminated and discerned from the other channel image buttons.
(4) The tuner unit includes multiple tuners that sample respective digital broadcasts in different broadcasting modes. The input unit includes multiple broadcasting mode operational buttons associated with the multiple tuners. When any of the broadcasting mode operational buttons is touched, the input unit generates a third operational signal. When the broadcasting mode operational button is depressed, the input unit generates a fourth operational signal. When the control unit detects the third operational signal during display of a program picture of a digital broadcast sampled by the tuner unit, the control unit displays on the display unit broadcasting mode information, which is signified by the third operational signal, together with the program picture being displayed.
(5) In the case (4), when the control unit detects the third operational signal, the control unit displays, on the display unit, mode button information, which includes multiple broadcasting mode image buttons associated with the multiple broadcasting mode operational buttons, together with the broadcasting mode information signified by the third operational signal.
(6) In the case (5), the multiple broadcasting mode operational buttons are juxtaposed. The mode button information is displayed on the display unit while including broadcasting mode image buttons that are juxtaposed in the same manner as the multiple broadcasting mode operational buttons are. The broadcasting mode image button signified by the third operational signal is displayed on the display unit so that it can be discriminated and discerned from the other image buttons.
(7) A recorder that records the program picture is included. The input unit includes a recorder mode operational button for use in designating a mode in which the recorder is operated. When the recorder mode operational button is touched, the input unit generates a fifth operational signal. When the recorder mode operational button is depressed, the input unit generates a sixth operational signal. When the control unit detects the fifth operational signal during display of the program picture, the control unit displays, on the display unit, recorder information together with the program picture being displayed. When the control unit detects the sixth operational signal, the control unit allocates facilities, which are needed to operate the recorder, to the multiple channel operational buttons, and displays on the display unit recorder button information representing the allocated facilities.
(8) In the case (3), a recorder that records the program picture is included. The input unit includes a recorder operational button for use in operating the recorder. When the recorder operational button is touched, the input unit generates a fifth operational signal. When the recorder operational button is depressed, the input unit generates a sixth operational signal. When the control unit detects the fifth operational signal during display of the program picture, the control unit displays on the display unit a recorder image button together with the program picture being displayed so that the recorder image button can be discriminated and discerned from the other image buttons.
(9) The tuner unit includes a first tuner and a second tuner. When the control unit detects the first operational signal during display of a program picture being received via the first tuner, the control unit receives a program signified by the first operational signal via the second tuner. The control unit displays the program picture received via the second tuner together with the program information signified by the first operational signal.

According to the present invention, there is provided a broadcast receiving apparatus making it possible to switch a program picture being displayed to another in a user-friendly manner while continuously viewing the program picture being displayed.

### IN THE DRAWINGS

These and other features, objects and advantages of the present invention will become more apparent from the following description when taken in conjunction with the accompanying drawings wherein:

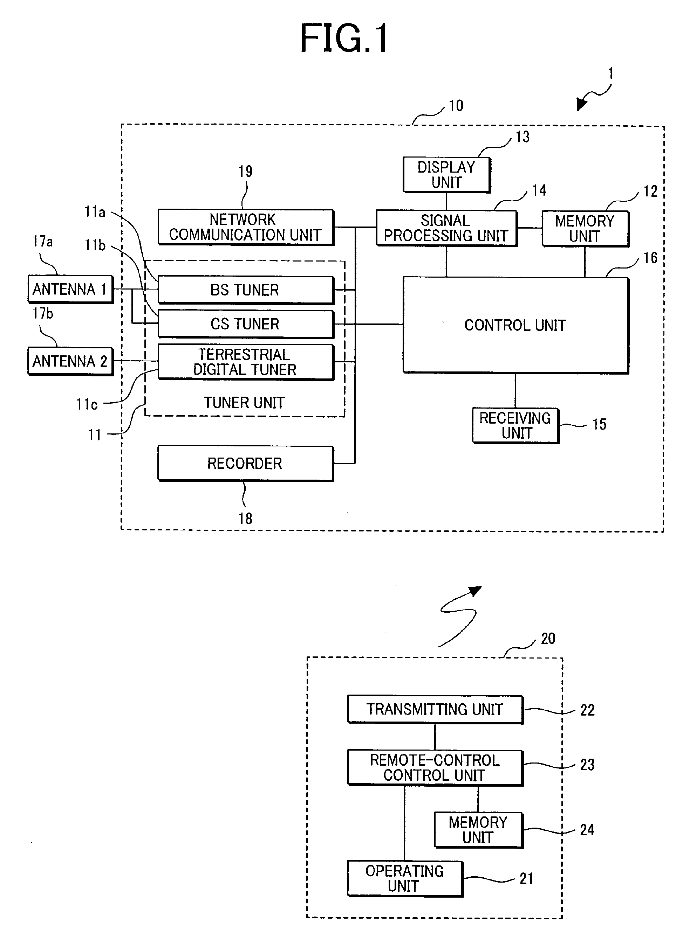

Fig. 1 shows an overall configuration of a broadcast receiving apparatus in accordance with the first embodiment of the present invention;

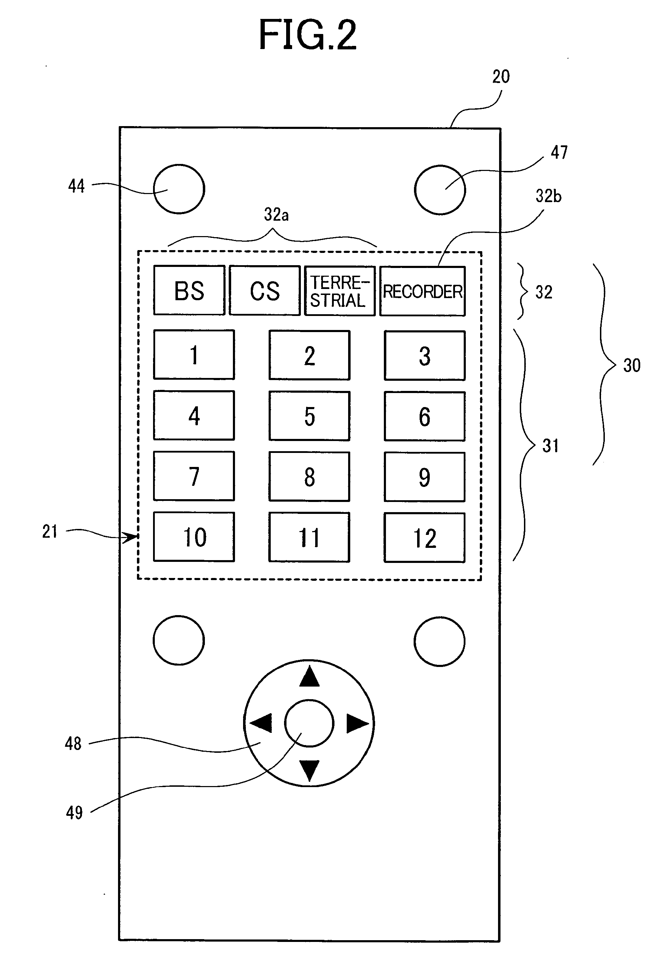

Fig. 2 is a plan view of a remote control included in the broadcast receiving apparatus shown in Fig. 1;

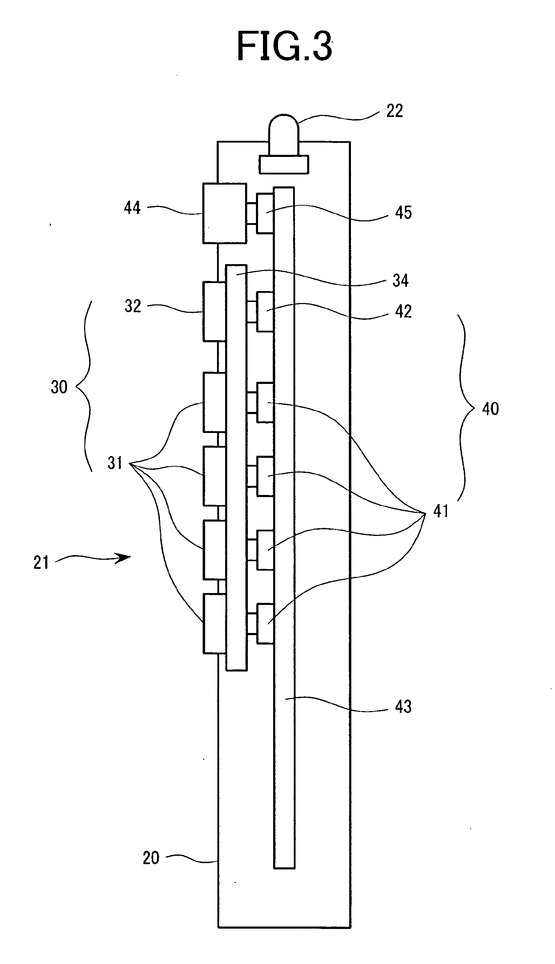

Fig. 3 is a schematic sectional view of the remote control shown in Fig. 2;

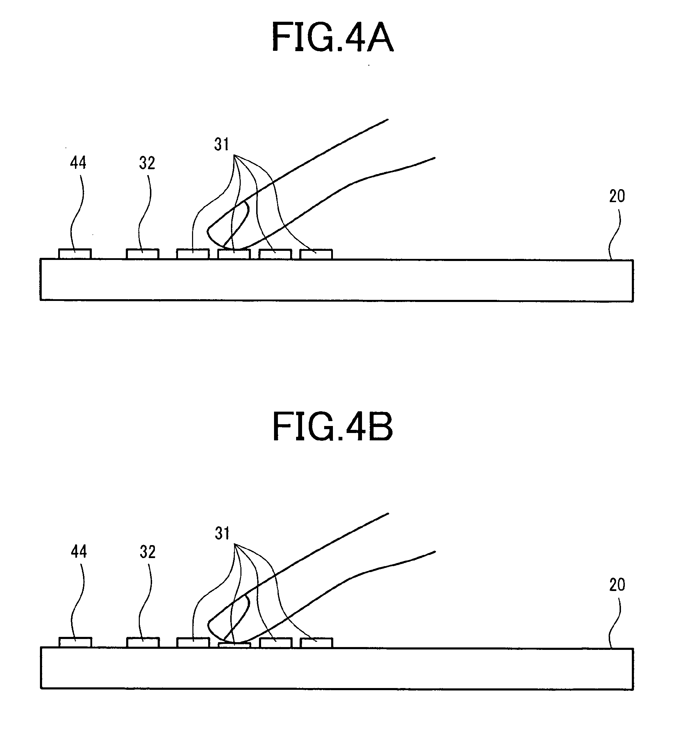

Fig. 4 is an explanatory diagram concerning manipulation of buttons on the remote control shown in Fig. 2;

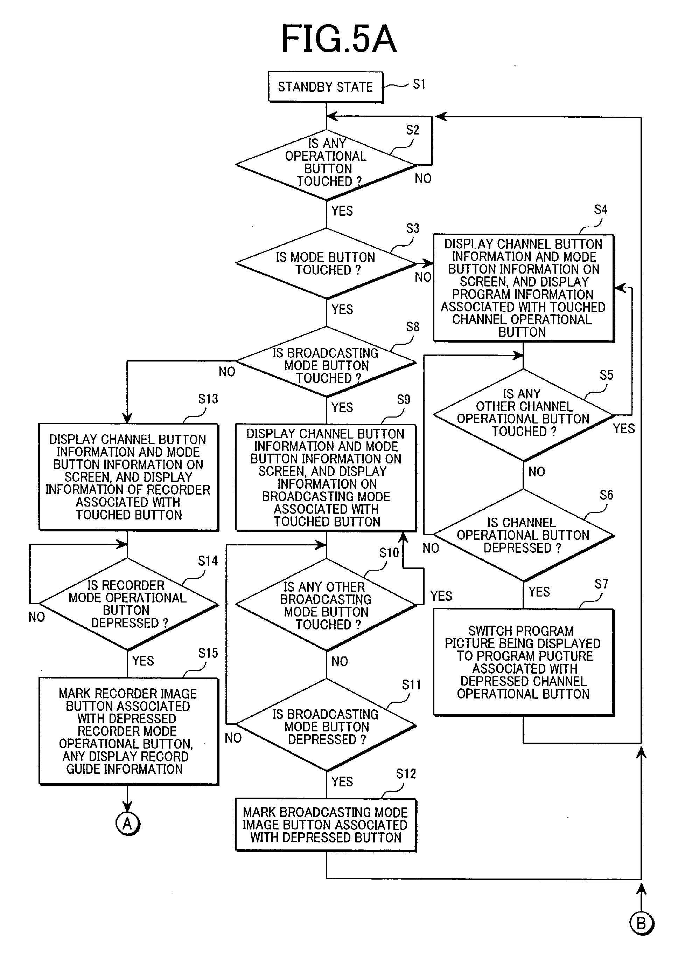

Fig. 5A is a flowchart describing actions to be performed in the broadcast receiving apparatus shown in Fig. 1;

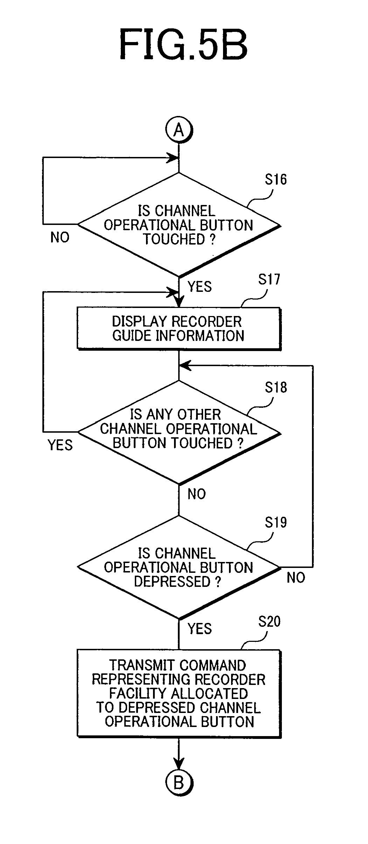

Fig. 5B is a flowchart (continued) describing the actions to be performed in the broadcast receiving apparatus shown in Fig. 1 ;

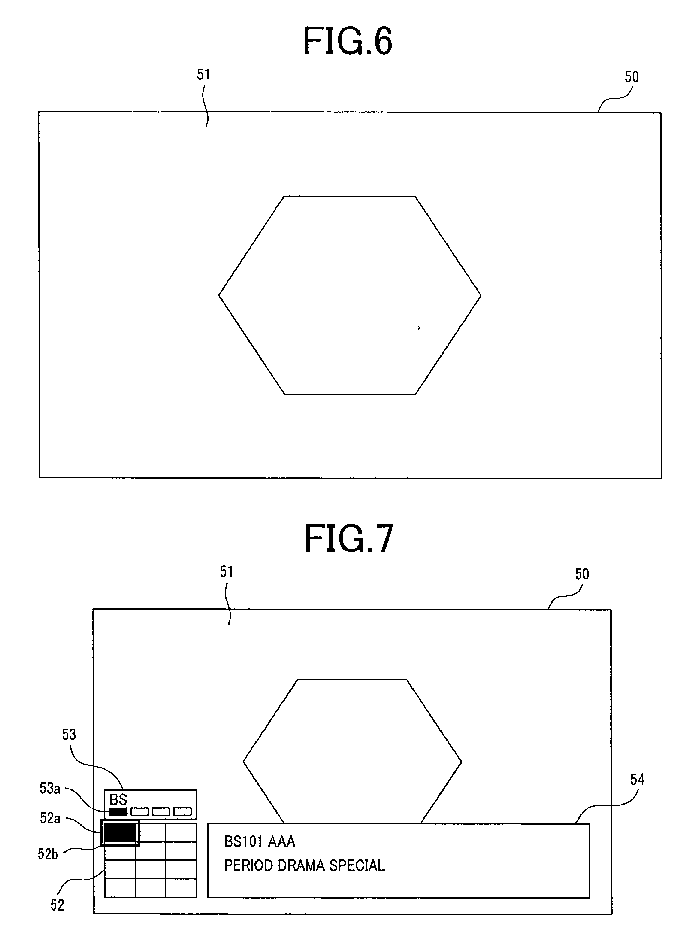

Fig. 6 shows the first example of a screen display to be attained according to the flowchart of Fig. 5 ;
Fig. 7 shows the second example of the screen display to be attained according to the flowchart of Fig. 5;

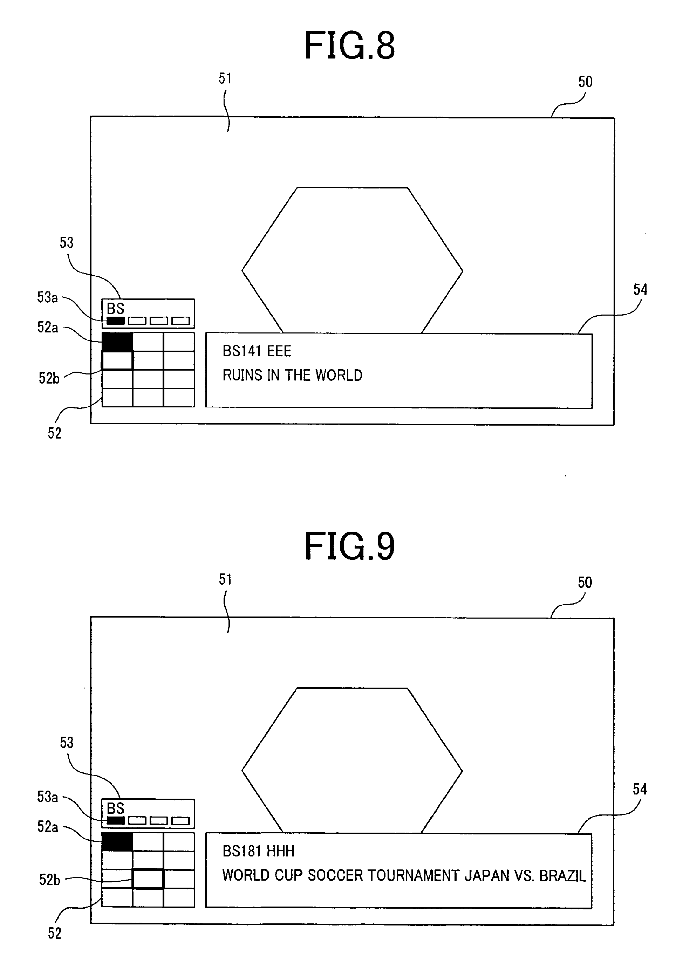

Fig. 8 shows the third example of the screen display to be attained according to the flowchart of Fig. 5;
Fig. 9 shows the fourth example of the screen display to be attained according to the flowchart of Fig. 5;

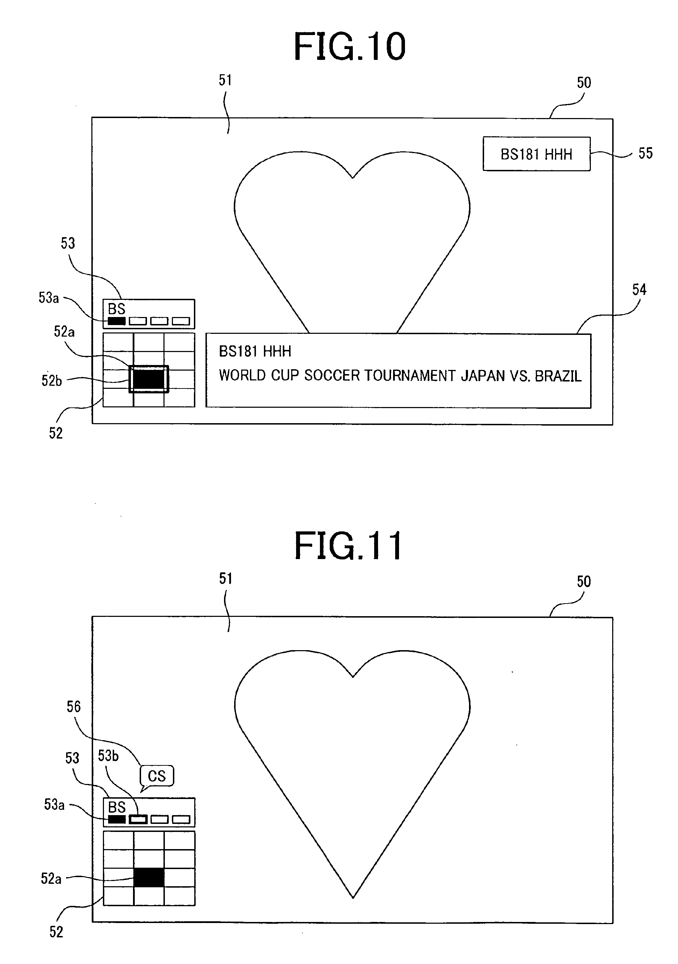

Fig. 10 shows the fifth example of the screen display to be attained according to the flowchart of Fig. 5;
Fig. 11 shows the sixth example of the screen display to be attained according to the flowchart of Fig. 5;

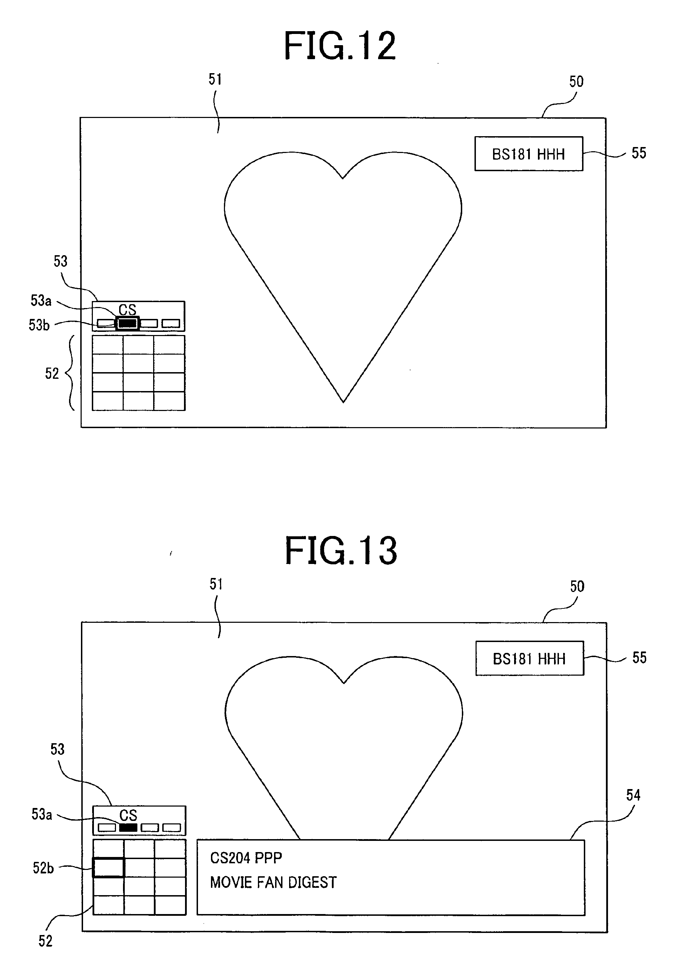

Fig. 12 shows the seventh example of the screen display to be attained according to the flowchart of Fig. 5;
Fig. 13 shows the eighth example of the screen display to be attained according to the flowchart of Fig. 5;

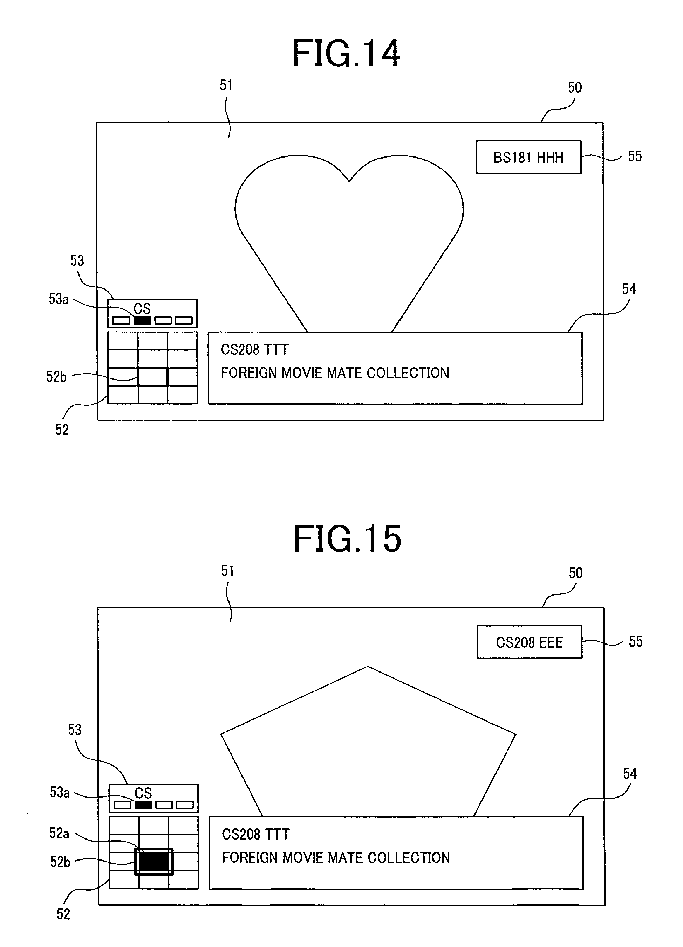

Fig. 14 shows the ninth example of the screen display to be attained according to the flowchart of Fig. 5;
Fig. 15 shows the tenth example of the screen display to be attained according to the flowchart of Fig. 5;

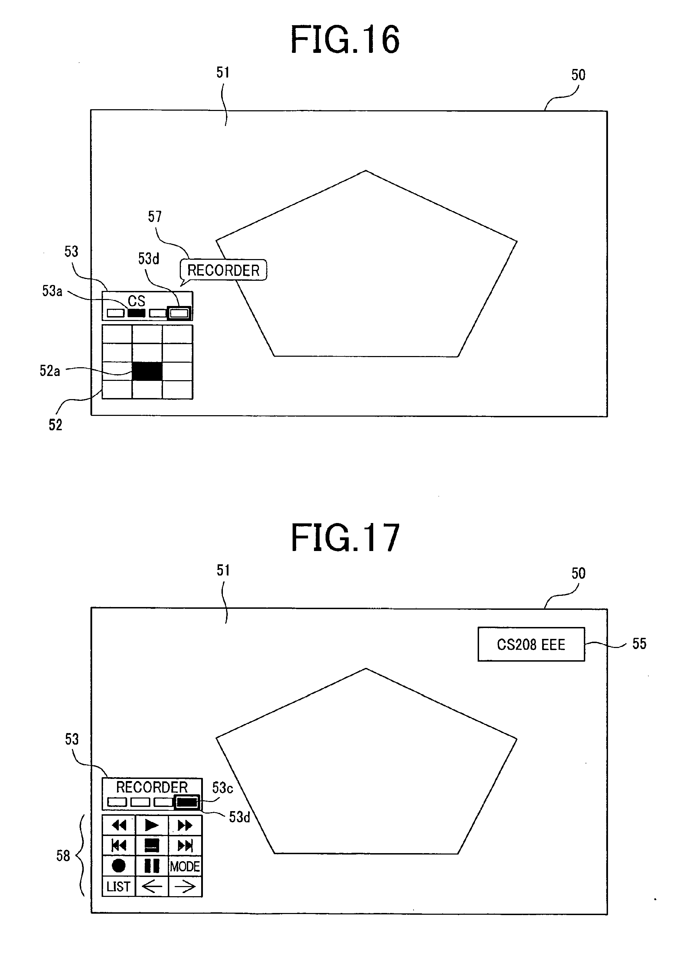

Fig. 16 shows the eleventh example of the screen display to be attained according to the flowchart of Fig. 5;
Fig. 17 shows the twelfth example of the screen display to be attained according to the flowchart of Fig. 5;

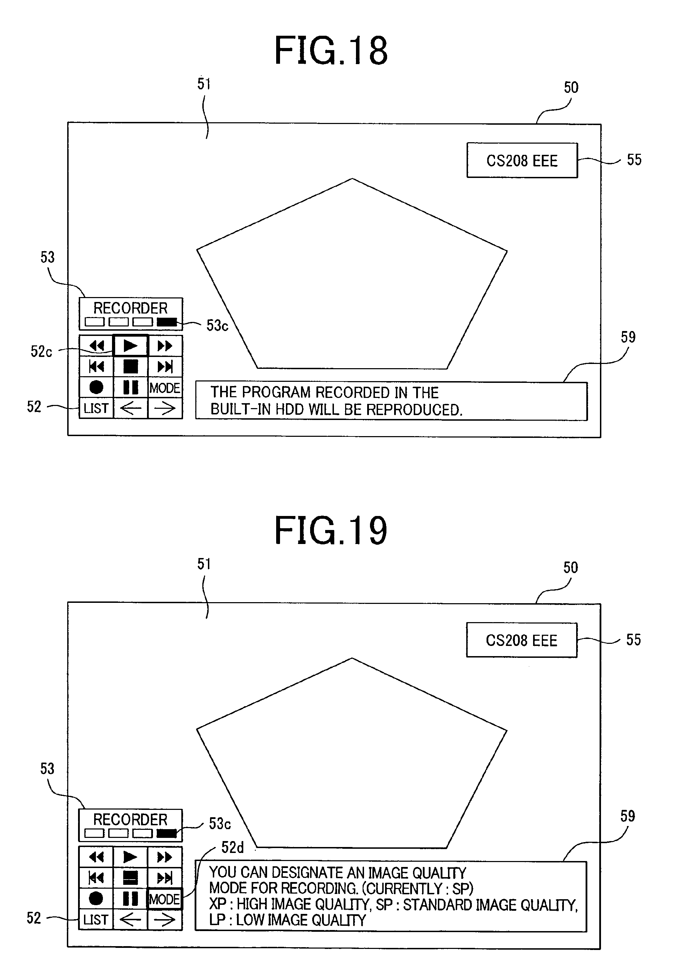

Fig. 18 shows the thirteenth example of the screen display to be attained according to the flowchart of Fig. 5;
Fig. 19 shows the fourteenth example of the screen display to be attained according to the flowchart of Fig. 5;

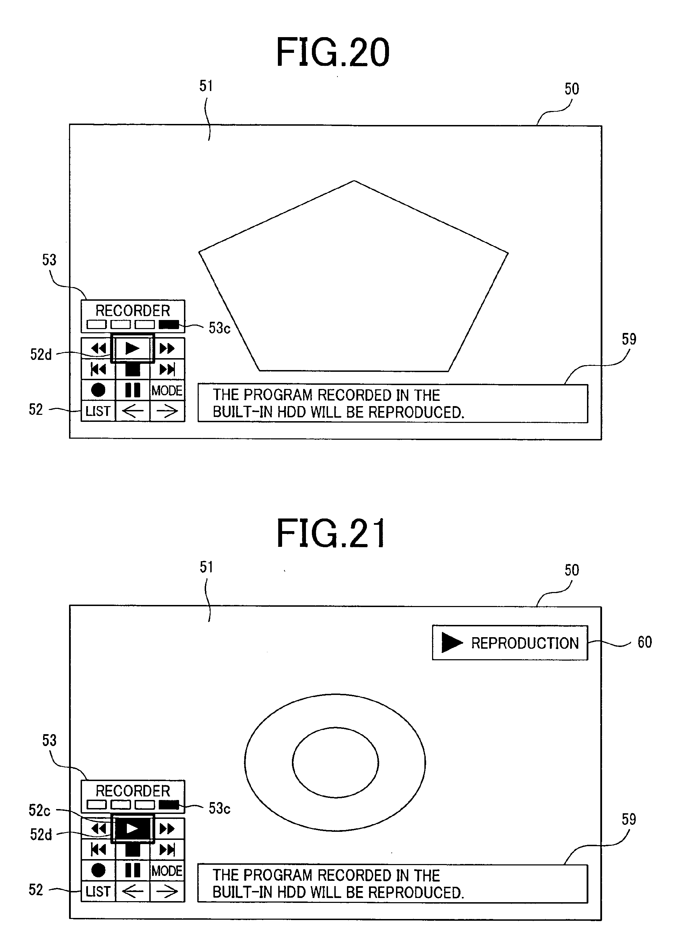

Fig. 20 shows the fifteenth example of the screen display to be attained according to the flowchart of Fig. 5;
Fig. 21 shows the sixteenth example of the screen display to be attained according to the flowchart of Fig. 5;

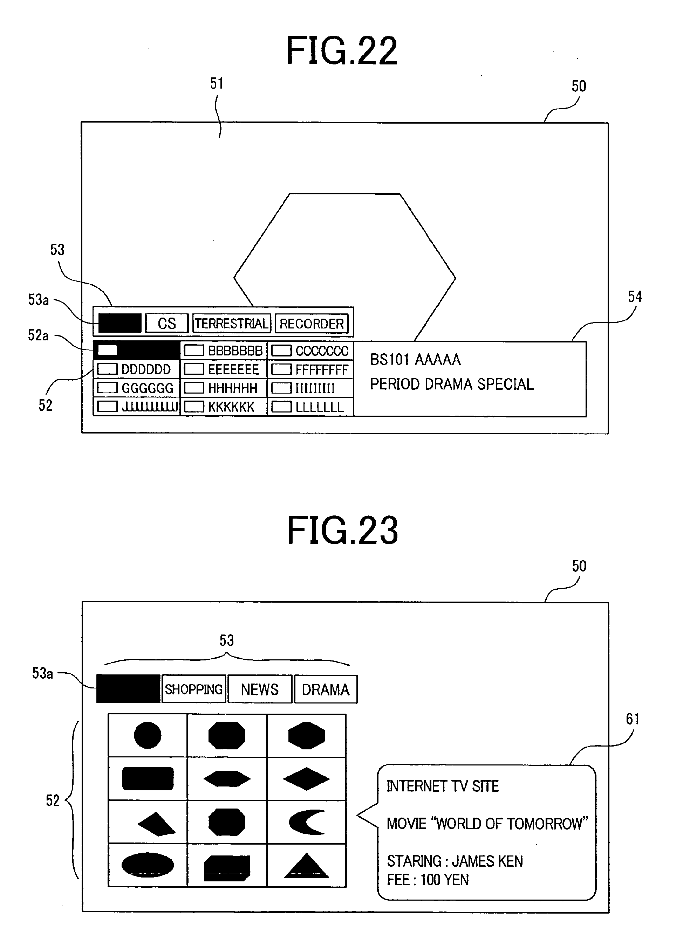

Fig. 22 shows a variant of the screen display shown in Fig. 7;
Fig. 23 shows the first example of a screen display to be attained when the broadcast receiving apparatus shown in Fig. 1 is connected on a network;

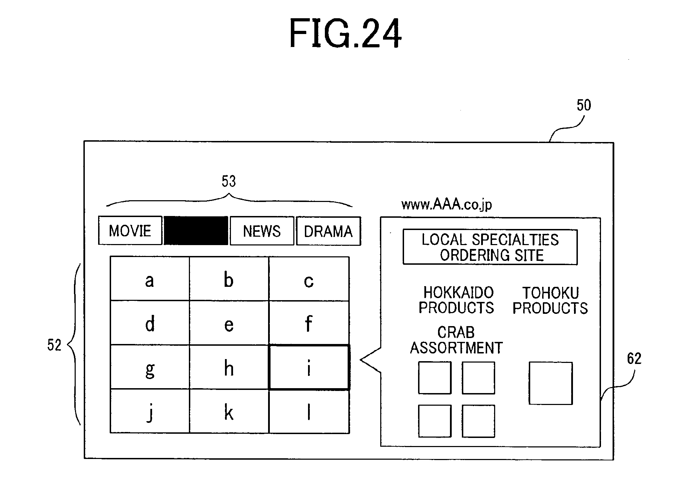

Fig. 24 shows the second example of the screen display to be attained when the broadcast receiving apparatus shown in Fig. 1 is connected on a network;

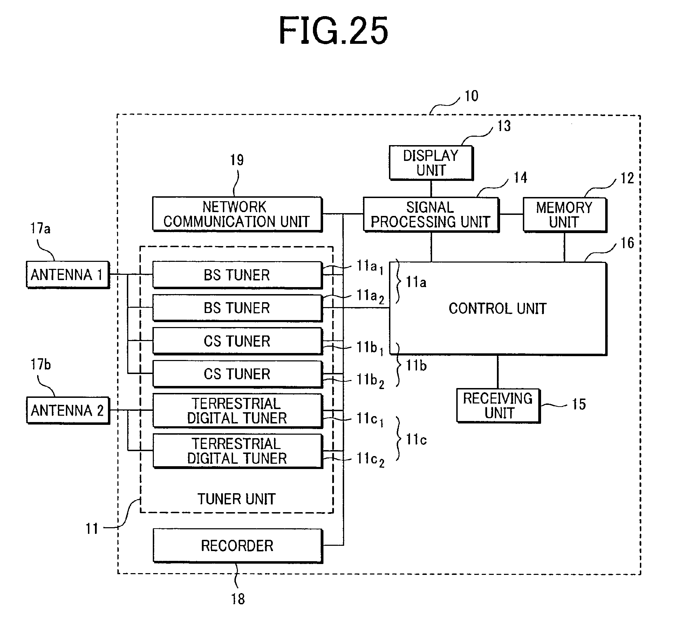

Fig. 25 shows the configuration of a main body of a broadcast receiving apparatus in accordance with the second embodiment of the present invention;

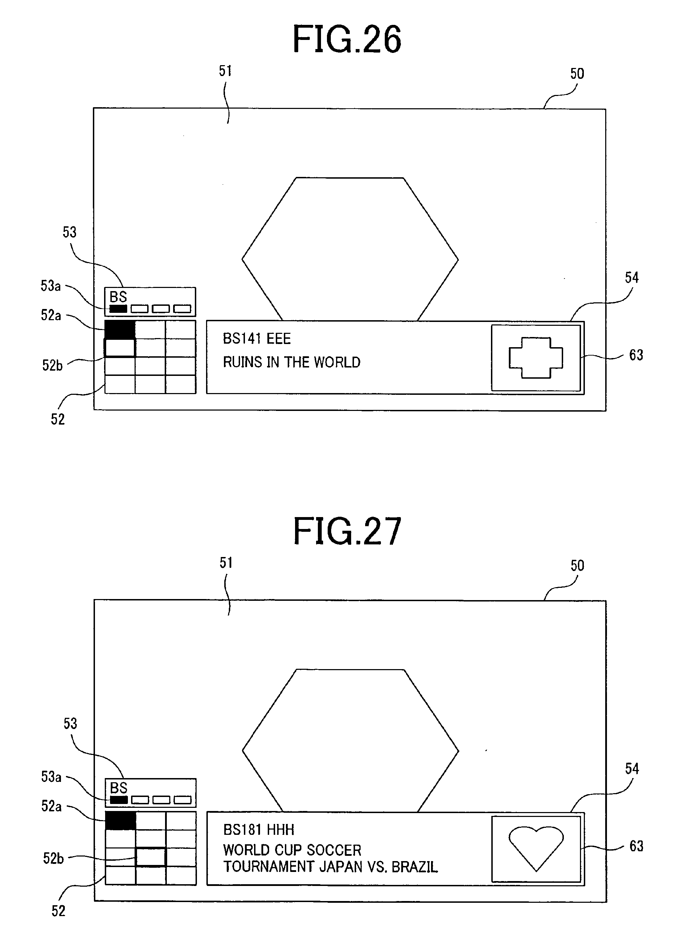

Fig. 26 shows the first example of a screen display on the broadcast receiving apparatus shown in Fig. 25;
Fig. 27 shows the second example of the screen display on the broadcast receiving apparatus shown in Fig. 25;

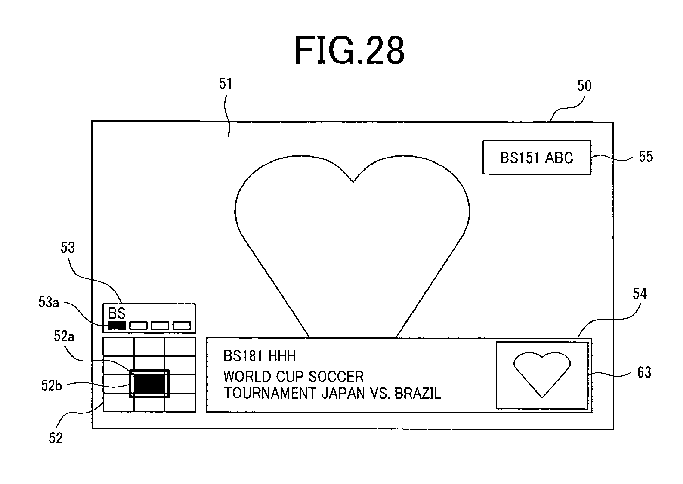

Fig. 28 shows the third example of the screen display on the broadcast receiving apparatus shown in Fig. 25;

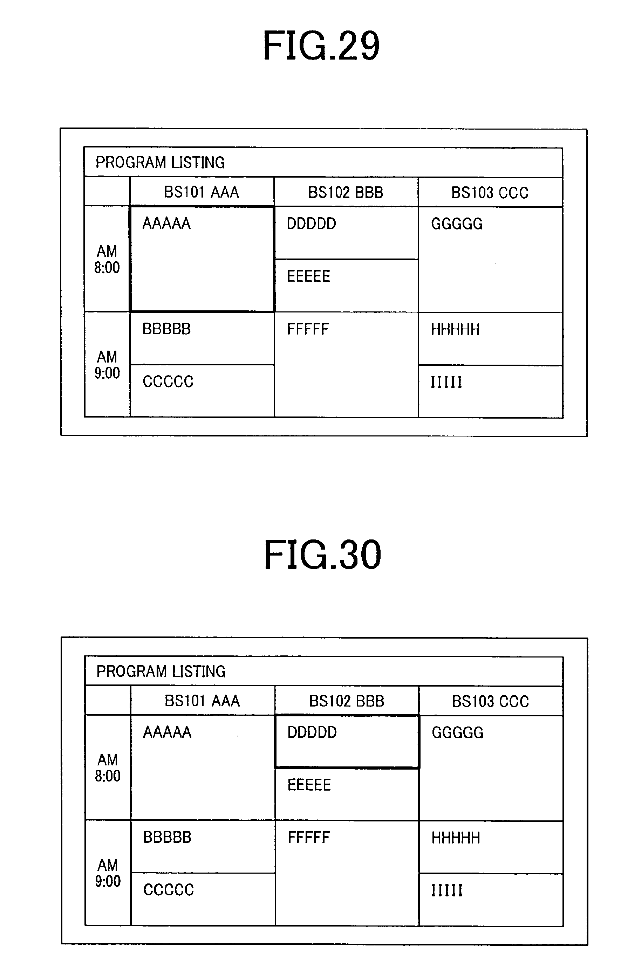

Fig. 29 shows the first example of a screen display on a broadcast receiving apparatus in accordance with the first related art;
Fig. 30 shows the second example of the screen display on the broadcast receiving apparatus in accordance with the first related art ;

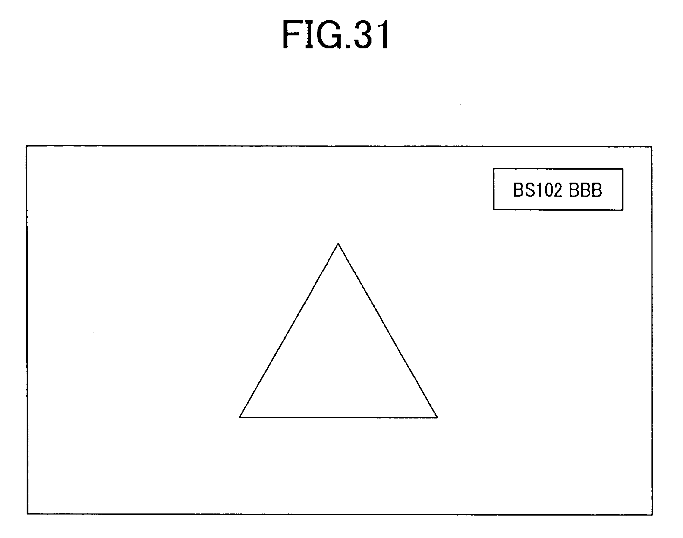

Fig. 31 shows the third example of the screen display on the broadcast receiving apparatus in accordance with the first related art;
Fig. 32 shows the first example of a screen display on a broadcast receiving apparatus in accordance with the second related art;
Fig. 33 shows the second example of the screen display on the broadcast receiving apparatus in accordance with the second related art;
Fig. 34 shows the third example of the screen display on the broadcast receiving apparatus in accordance with the second related art;
Fig. 35 shows the first example of a screen display on a broadcast receiving apparatus in accordance with the third related art;
Fig. 36 shows the second example of the screen display on the broadcast receiving apparatus in accordance with the third related art;
Fig. 37 shows the third example of the screen display on the broadcast receiving apparatus in accordance with the third related art; and

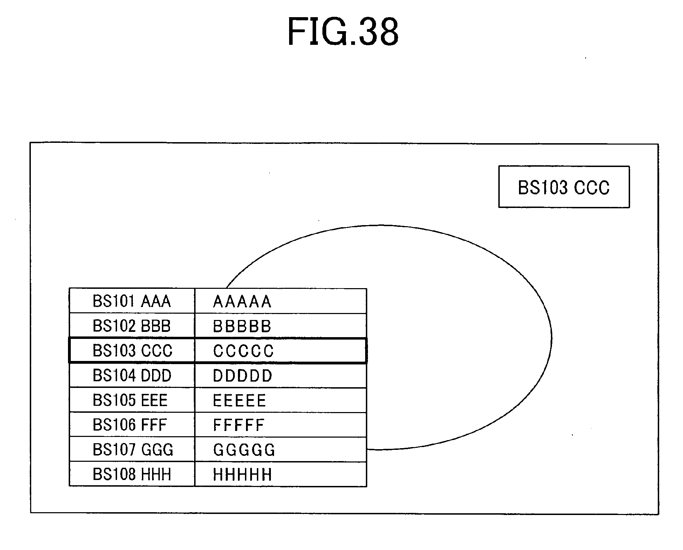

Fig. 38 shows the fourth example of the screen display on the broadcast receiving apparatus in accordance with the third related art.

Multiple embodiments of the present invention will be described in conjunction with the drawings below. In the drawings showing the embodiments, the same reference numerals are assigned to the identical or equivalent components.

### [First Embodiment]

Referring to Fig. 1 to Fig. 24, a broadcast receiving apparatus in accordance with the first embodiment of the present invention will be described below.

To begin with, the whole of a broadcast receiving apparatus 1 in accordance with the present embodiment will be described with reference to Fig. 1. Fig. 1 shows an overall configuration of the broadcast receiving apparatus 1 in accordance with the first embodiment of the present invention. The present embodiment will be described by taking a typical television for instance. The present invention can be applied to a personal computer or a portable cellular phone that is used as a broadcast receiving apparatus, and to a case where a broadcast transmitted through wire communication is received.

The broadcast receiving apparatus 1 in accordance with the present embodiment receives digital broadcasts in multiple broadcasting modes, for example, a terrestrial digital broadcast, a broadcasting satellite (BS) digital broadcast, a communications satellite digital broadcast, and an Internet broadcast, processes data contained in a received broadcast, and displays the data as a program picture and program information. The broadcast receiving apparatus 1 includes a main body 10 and a remote control 20.

The main body 10 includes a tuner unit 11, a network communication unit 19, a recorder 18, a main-body memory unit 12, a display unit 13 on which a program picture, channel button information, mode button information, and program information are displayed, a signal processing unit 14, a receiving unit 15, and a main-body control unit 16 that controls these components on a centralized manner. The memory unit in the broadcast receiving apparatus 1 includes the main-body memory unit 12 and a remote-control memory unit 24 that will be described later. Moreover, the control unit in the broadcast receiving apparatus 1 includes the main-body control unit 16 and a remote-control control unit 23 that will be described later.

The tuner unit 11 samples a predetermined broadcast signal from among digital broadcasts received via antennas 17a and 17b, and includes multiple tuners 11a to 11c. Specifically, the tuner unit 11 includes the tuner 11a that samples a digital broadcast signal from a broadcasting satellite (BS) digital broadcast received via the antenna 11a, the tuner 11b that samples a digital broadcast signal from a communications satellite (CS) digital broadcast received via the antenna 17a, and the tuner 11c that samples a digital broadcast signal from a terrestrial digital broadcast received via the antenna 17b.

The network communication unit 19 is intended to communicate with the Internet, is connected to a communication line linked to the Internet, and receives a digital broadcast distributed over the Internet.

The recorder 18 is realized with an optical disk drive or a magneto-optical disk drive, and is used to record a broadcast received via the tuner unit 11 and network communication unit 19.

In the main-body memory unit 12, executable programs and various kinds of data items are stored in advance, and data contained in a received digital broadcast, for example, program information data (EPG data) is stored. The EPG data is decoded by the signal processing unit 14.

The display unit 13 includes a display screen and is formed with a display panel such as a plasma display panel (PDP) or a liquid crystal display panel.

The signal processing unit 14 processes an output signal of the tuner unit 11, recorder 18, network communication unit 19, or memory unit 12 so as to produce a displayable signal, and transmits the displayable signal to the display unit 13. Moreover, the signal processing unit 14 processes program information contained in an output signal of the tuner unit 11 or network communication unit 19 so as to produce a recordable signal, and transmits the recordable signal to the main-body memory unit 12.

The receiving unit 15 is used to communicate with the remote control 20 and formed with an infrared receiving unit. The receiving unit 15 receives a command signal carried by infrared radiation sent from the remote control 20, and transfers the command signal to the main-body control unit 16.

The main-body control unit 16 controls the components of the main body 10 in response to a command signal sent from the remote control 20. Under the control of the main-body control unit 16, a digital broadcast received via the antenna 17a or 17b is sampled by the tuner unit 11, processed by the signal processing unit 14, and displayed as a program picture on the display unit 13. Moreover, a digital broadcast received via the network communication unit 19 is processed by the signal processing unit 14, and displayed as a program picture on the display unit 13. Moreover, under the control of the main-body control unit 16, data recorded in the recorder 18 is processed by the signal processing unit 14, and displayed as a picture on the display unit 13.

The remote control 20 serves as an input unit and includes an operating unit 21, a transmitting unit 22, a remote-control control unit 23, and a remote-control memory unit 24.

When any of operational buttons 31 (see Fig. 2 to Fig. 4) is touched by a user's finger or the like, the remote control 20 generates a first operational signal. When the channel operational button 31 is depressed by the user's finger or the like, the remote control 20 generates a second operational signal. Moreover, any of broadcasting mode operational buttons 32a (see Fig. 2 to Fig. 4) is touched by a user's finger or the like, the remote control 20 generates a third operational signal. When the broadcasting mode operational button 32a is depressed by the user's finger or the like, the remote control generates a fourth operational signal. Further, when a recorder mode operational button 32b (see Fig. 2 to Fig. 4) is touched by a user's finger or the like, the remote control 20 generates a fifth operational signal. When the recorder mode operational button 32b is depressed by the user's finger or the like, the remote control generates a sixth operational signal.

Owing to the foregoing configuration, when a user performs a series of ordinary manipulations, that is, when a user touches any of the channel operational buttons 31, broadcasting mode operational buttons 32, and recorder mode operational button 32b, and then depresses the touched button, the first and second operational signals, the third and fourth operational signals, or the fifth and sixth operational signals are time-sequentially generated. Consequently, when the remote control 20 is used, two time-sequential operational signals can be generated without cumbersome manipulations.

When the main-body control unit 16 detects the first operational signal because any of the channel operational buttons 31 is touched during display of a program picture on the display unit 13, the main-body control unit 16 displays on the display unit 13 program information signified by the first operational signal together with the program picture being displayed. After detecting the first operational signal, when the main-body control unit 16 detects the second operational signal because the channel operational button 31 is depressed, the main-body control unit 16 switches the program picture being displayed into a program picture described in program information signified by the first operational signal.

When a user wants to view a program other than a program being displayed, a manipulation of touching any of the channel operational buttons 31 initiates display of program information associated with the channel operational button 31. The program associated with the channel operational button 31 can be checked to see if it is a desired program. If the program is a desired program, a simple manipulation of depressing the channel operational button 31 should merely be performed in order to display the program picture. Moreover, the display of the previous program picture can be continued until the display is switched to another by depressing the channel operational button 31.

Next, referring to Fig. 2 to Fig. 4, the remote control 20 will be detailed below. Fig. 2 is a plan view of the remote control 20 shown in Fig. 1. Fig. 3 is a schematic sectional view of the remote control 20 shown in Fig. 2. Figs. 4A and 4B are explanatory diagrams concerning manipulations to be performed on the buttons on the remote control 20 shown in Fig. 2. Fig. 4A shows a state in which a user's finger touches an operational button 30, while Fig. 4B shows a state in which the operational button 30 in the state shown in Fig. 4A is depressed by the user's finger.

The operating unit 21 of the remote control 20 includes the operational buttons 30, a first circuit board 34, operational tact switches 40, a second circuit board 43, a power button 44, a power tact switch 45, an Internet button 47, a cursor key 48, and a decision key 49.

The operational buttons 30 are a group of buttons including multiple channel operational buttons 31 and multiple mode operational buttons 32. The mode operational buttons 32 include multiple broadcasting mode operational buttons 32a and a recorder mode operational button 32b.

The channel operational buttons 31 are manipulated by a user in order to select any of channels in a broadcasting mode selected with any of the broadcasting mode operational buttons 32a. The channel operational buttons 31 are a group of buttons arrayed in the known form of a lattice. In the illustrated example, twelve channel operational buttons 31 are arrayed in the form of a lattice, and channel numbers are inscribed in the respective tops of the channel operational buttons 31.

The broadcasting mode operational buttons 32a are manipulated by a user in order to select any of multiple digital broadcasting modes, for example, any of a broadcasting satellite (BS) digital broadcasting mode, a communications satellite (CS) digital broadcasting mode, and a terrestrial digital broadcasting mode. The recorder mode operational button 32b is manipulated by a user in order to select the recorder 18. The broadcasting mode operational buttons 32a and recorder mode operational button 32b are juxtaposed adjacently along one side of the group of channel operational buttons 31.

The channel operational buttons 31, broadcasting mode operational buttons 32a, and recorder mode operational button 32b are mounted on the first circuit board 34. When a user touches any of the channel operational buttons 31, broadcasting mode operational buttons 32a, and recorder mode operational button 32b with his/her finger, the touched broadcasting mode operational button 32a or channel operational button 31 senses contact pressure. The sense signal is then sent to the remote-control control unit 23.

For example, when a user touches, as shown in Fig. 4A, any of the channel operational buttons 31 with his/her finger, the touched channel operational button 31 senses contact pressure. The sense signal is transferred to the remote-control control unit 23. Based on the result of detection, the remote-control control unit 23 reads a predetermined control signal code from the remote-control memory unit 24 and regards it as a first operational signal. The first operational signal is transmitted from the transmitting unit 22 to the receiving unit 15, and transferred from the receiving unit 15 to the main-body control unit 16.

Moreover, when a user touches any of the broadcasting mode operational buttons 32a with his/her finger, the touched broadcasting mode operational button 32a senses contact pressure. The sense signal is then transferred to the remote-control control unit 23. Based on the result of detection, the remote-control control unit 23 reads a predetermined control signal code from the remote-control memory unit 24 and regards it as a third operational signal. The third operational signal is transmitted from the transmitting unit 22 to the receiving unit 15, and transferred from the receiving unit 15 to the main-body control unit 16.

Further, when a user touches the recorder mode operational button 32b with his/her finger, the touched recorder mode operational button 32b senses contact pressure. The sense signal is transferred to the remote-control control unit 23. Based on the result of detection, the remote-control control unit 23 reads a predetermined control signal code from the remote-control memory unit 24 and regards it as a fifth operational signal. The fifth operational signal is transmitted from the transmitting unit 22 to the receiving unit 15, and transferred from the receiving unit 15 to the main-body control unit 16.

The operational tact switches 40 include channel tact switches 41, broadcasting mode tact switches 42, and a recorder mode tact switch (not shown). The channel tact switches 41 are aligned and associated with the respective channel operational buttons 31. The broadcasting mode tact switches 42 are aligned and associated with the respective broadcasting mode operational buttons 32a. The recorder tact switch is aligned and associated with the recorder mode operational button 32b.

The channel tact switches 41, broadcasting mode tact switches 42, and recorder mode tact switch are mounted on the second circuit board 43. When a user depresses any of the channel operational buttons 31, broadcasting mode operational buttons 32a, and recorder mode operational button 32b, the broadcasting mode tact switch 42, recorder mode tact switch, or channel tact switch 41 associated with the depressed broadcasting mode operational button 32a, recorder mode operational button 32b, or channel operational button 31 is made. The make signal is transferred to the remote-control control unit 23.

For example, when a user depresses, as shown in Fig. 4B, any of the channel operational buttons 31, the channel tact switch 41 associated with the channel operational button 31 is made. The make signal is transferred to the remote-control control unit 23. Based on the result of detection, the remote-control control unit 23 produces a predetermined control signal code and regards it as a second operational signal. The second operational signal is transmitted from the transmitting unit 22 to the receiving unit 15, and transferred from the receiving unit 15 to the main-body control unit 16.

When a user depresses any of the broadcasting mode operational buttons 32a, the broadcasting mode tact switch 42 associated with the broadcasting mode operational button 32a is made. The make signal is transferred to the remote-control control unit 23. Based on the result of detection, the remote-control control unit 23 produces a predetermined control signal code and regards it as a fourth operational signal. The fourth operational signal is transmitted from the transmitting unit 22 to the receiving unit 15, and transferred from the receiving unit 15 to the main-body control unit 16.

When a user depresses the recorder mode operational button 32b, the recorder mode tact switch associated with the recorder mode operational button 32b is made. The make signal is transferred to the remote-control control unit 23. Based on the result of detection, the remote-control control unit 23 produces a predetermined control signal code and regards it as a sixth operational signal. The sixth operational signal is transmitted from the transmitting unit 22 to the receiving unit 15, and transferred from the receiving unit 15 to the main-body control unit 16.

Operational facilities associated with each of the mode operational buttons 32 are allocated to the respective operational buttons 30 and respective operational tact switches 40.

The power button 44 is flush with the operational buttons 30. The power tact switch 45 is mounted on the second circuit board 43 and is made by depressing the power button 44. The make signal of the power tact switch 45 is transferred to the remote-control control unit 23.

The Internet button 47 is flush with the operational buttons 30. The Internet tact switch (not shown) is mounted on the second circuit board 43 in association with the Internet button 47, and is made by depressing the Internet button 47. The make signal of the Internet tact switch is transferred to the remote-control control unit 23.

The cursor key 48 is flush with the operational buttons 30. The cursor tact switches (not shown) are mounted on the second circuit board 43 while being aligned and associated with four circumferential positions on the cursor key 48. When any of the four positions on the cursor key 48 is depressed, the associated cursor tact switch is made. The make signal of the cursor tact switch is, similarly to the foregoing tact switches, transferred to the remote-control unit 23.

The decision key 49 is flush with the operational buttons 30 and located in the center of the cursor key 48. A decision tact switch (not shown) is mounted on the second circuit board 43 while being aligned and associated with the decision key 49. When the decision key 49 is depressed, the decision tact switch is made. The make signal of the decision tact switch is, similarly to the foregoing tact switches, transferred to the remote-control control unit 23.

Next, referring to Fig. 5 to Fig. 23, concrete actions to be performed in the broadcast receiving apparatus 1 in accordance with the present embodiment will be described below. Fig. 5A is a flowchart describing the actions to be performed in the broadcast receiving apparatus 1 shown in Fig. 1. Fig. 5B is a flowchart describing the actions and being continued from Fig. 5A. Fig. 6 to Fig. 21 show examples of screen displays to be attained according to the flowcharts of Fig. 5A and Fig. 5B.

When the power button 44 on the remote control 20 is manipulated in order to turn on the power tact switch 45, the main-body control unit 16 enters a standby state (step S1). In the standby state, a program picture based on a broadcasting mode and a channel number that have been selected at the time of turning off the power tact switch 45 previously (in other words, a program picture on a channel number that has been viewed last in the previous broadcasting mode) is displayed on the display unit 13. For example, an example of a screen display shown in Fig. 6 is such that the BS digital broadcasting is designated as a broadcasting mode and 101AAA is designated as a channel number. The BS tuner 11a is in operation. A description will be made by referencing examples of screen displays to which a transition will be made from the example of the screen display shown in Fig. 6.

In the standby state, a decision is made on whether a user has touched any of the operational buttons 30 on the remote control 20 (step S2). The state is sustained until any of the operational buttons 30 is touched. At step S2, if a decision is made that any of the operational buttons 30 has been touched, a decision is made on whether the user has touched any of the mode operational buttons 32 on the remote control 20 (step S3).

At step S3, if a decision is made that any of the mode operational buttons 32 has not been touched, it means that none of the mode operational buttons 32 has been touched but any of the channel operational buttons 31 has been touched (namely, the first operational signal has been detected). Control is therefore passed to step S4.

At step S4, pieces of information that are channel button information 52, mode button information 53, and program information 54 are, as seen from the example of the screen display shown in Fig. 7, displayed on the display screen 50 of the display unit 13 together with a program picture 31 being displayed. The channel button information 52 includes a group of multiple channel image buttons or a group of numerals identical to those inscribed in the input unit. The mode button information 53 includes a group of multiple broadcasting mode image buttons and a recorder image button. The image buttons or numerals are displayed while being arrayed in the same manner as the operational buttons 30 on the remote control 20 are. Consequently, a user intuitively grasps the positional relationship of the operational button 30, which the user is touching, to the other buttons without looking at the user's hand.

At this time, a channel image button and a broadcasting mode image button relevant to the program picture 51 being displayed are displayed with marks 52a and 53a respectively (painting in black in Fig. 7) appended thereto so that the buttons can be readily discerned. Moreover, a mark 52b (black frame in Fig. 7) is displayed together with a channel image button associated with the touched channel operational button 31 so that the image button can be readily discerned. Moreover, program information is sampled from pieces of program information stored in the memory unit 12 on the basis of a current time instant acquired from broadcast data and channel information pre-set to the touched button. The channel number BS101AAA and the program guide information "Period Drama Special" are displayed as the program information 54. In Fig. 7, a program picture designated with the touched channel operational button 31 is squared with the program picture 51 being displayed. Thus, a user can readily learn the program information 54 concerning the program picture 51 being broadcasted by performing a simple manipulation.

In this state, a decision is made on whether any other channel operational button 31 has been touched (step S5). If any other channel operational button 31 has been touched, control is returned to step S4. The mark 52b indicating a channel image button associated with the touched channel operational button 31 is, as shown in Fig. 8, shifted, and program information 54 associated with the newly touched channel operational button 31 is displayed. The program information 54 signifies that the channel number is BS141EEE and the program guide information is "Ruins in the World." Thus, a user can readily learn the program information 54 associated with the channel operational button by performing a very simple manipulation without the necessity of switching the program picture being displayed to a program picture on a channel pre-set to the touched button on the remote control.

In this state, control is passed to step S5. A decision is made on whether any other channel operational button 31 has been touched. If any other channel operational button 31 has been touched, control is returned to step S4. The mark 52b is shifted to a channel image button associated with the newly touched channel operation button 31, and program information 54 associated with the newly touched channel operational button 31 is displayed. The program information 54 in the illustrated example signifies that the channel number is BS181HHH and the program guide information is "World Cup Soccer Tournament Japan vs. Brazil."

If a decision is made at step S5 that any other channel operational button 31 has not been touched, a decision is made on whether the channel operational button 31 has been depressed (the second operational signal has been detected) (step S6). If the channel operational button 31 has not been depressed, control is returned to step S5. The foregoing procedure is repeated.

If a decision is made at step S6 that the channel operational button 31 has been depressed, the program picture being displayed is switched to a program picture 51 associated with the depressed channel operational button 31, and moreover, the marks 52a and 52b are appended to the channel image button, as shown in Fig. 10 (step S7). Consequently, a user can readily learn program information concerning a program to be displayed next by performing a very simple manipulation without the necessity of switching the program picture being displayed to the program picture to be displayed next. Moreover, the user can readily switch the program picture being displayed to the program picture 51 the user wants to see. Incidentally, channel number information "BS181HHH" 55 is displayed within a main screen display so that the user can confirm that the channel number of the selected program picture 51 is squared with the channel number the user wants to display. After the program pictures are switched, when none of the channel operational buttons is touched and a predetermined time elapses, the channel button information 52, mode button information 53, program information 54, and channel number information 55 disappear.

As shown in Fig. 7 to Fig. 10, while the program picture 51 is displayed on the entire display screen 50 of the display unit 13, the program information 54 is displayed on part of the program picture 51 being displayed. Consequently, discernment of the program picture 51 and discernment of the program information 54 can be managed simultaneously.

If a decision is made at step S3 that any of the mode operational buttons 32 has been touched, it means that none of the channel operational buttons 31 is touched but any of the mode operational buttons 32 is touched. A decision is made on whether any of the broadcasting mode operational buttons 32a has been touched (step S8). If a decision is made that any of the broadcasting mode operational buttons 32a is touched (the third operational signal generated with the touch of any of the broadcasting mode operational buttons 32a has been detected), control is passed to step S9.

At step S9, the channel button information 52, mode button information 53, and mode information 56 are, as shown in Fig. 11, displayed on the display screen 50 of the display unit 13 together with the program picture 51 being displayed. At this time, the marks 52a and 53a making it easy to identify a channel image button and a broadcasting mode image button that relate to the program picture 51 being displayed are appended to the channel button information and mode button information respectively. Moreover, the mark 53b is appended to the broadcasting mode image button so that the broadcasting mode image button associated with the touched broadcasting mode operational button 32a can be easily identified. Moreover, broadcasting mode information 56 signifying the broadcasting mode image button 53b, that is, "CS" in the illustrated example is displayed. Thus, a user can confirm a broadcasting mode of a channel to be selected by depressing the channel operational button (a CS channel in this example) by performing a very simple manipulation without the necessity of checking the inscription on the operational button on the hand-held remote control.

In this state, control is passed to step S10. A decision is made on whether any other broadcasting mode operational button 32a has been touched. If any other broadcasting mode operational button 32a has been touched, control is returned to step S9. The mark 53b indicating a channel image button associated with the touched broadcasting mode operational button 32 is shifted, and broadcasting mode information 56 associated with the newly touched broadcasting mode operational button 32a is displayed.

If a decision is made at step S10 that any other broadcasting mode operational button 32a has not been touched, a decision is made on whether the broadcasting mode operational button 32 has been depressed (the second operational signal has been detected) (step S11). If the broadcasting mode operational button 32a has not been depressed, control is returned to step S10. The foregoing procedure is repeated.

If a decision is made at step S11 that the broadcasting mode operational button 32a has been depressed, while the program picture is continuously displayed, the marks 53a and 53b are, as shown in Fig. 12, appended to a broadcasting mode image button associated with the depressed broadcasting mode operational button 32a (step S12).

Thereafter, control is returned to step S2. For example, actions described as step S2 to step S7 are performed in order to attain screen displays shown in Fig. 13 to Fig. 15. The actions to be performed in order to attain the screen displays are identical to those performed in order to attain the screen displays shown in Fig. 8 to Fig. 10. An iterative description will be omitted.

If a decision is made at step S8 that none of the broadcasting mode operational buttons has been touched (the fifth operational signal has been detected), it means that none of the broadcasting mode operational buttons 32a has been touched but the recorder operational button 32b has been touched. Control is therefore passed to step S13.

At step S13, the channel button information 52, mode button information 53, and recorder information 57 are displayed on the display screen 50 of the display unit 13 together with the program picture 51 being displayed. At this time, the marks 52a and 53a are appended so that a channel image button and a broadcasting mode image button which relate to the program picture 51 being displayed can be readily identified. Moreover, a mark 53c is appended to the recorder mode image button associated with the touched recorder mode operational button 32 so that the recorder mode image button can be readily identified. Moreover, the recorder information 57 associated with the recorder mode image button 53c, that is, "Recorder" in the illustrated example is displayed. Thus, a user can readily recognize that the user is about to select a recorder mode from among the operational modes, by performing a quite simple manipulation while viewing the program picture 51 being displayed. Namely, the user can readily recognize that the user is about to switch the facilities allocated to the respective operational buttons 30 on the remote control into those needed to operate the recorder.

In this state, control is passed to step S14. A decision is made on whether the recorder mode operational button 32b has been depressed (the sixth operational signal has been detected). If the recorder mode operational button 32b has not been depressed, a wait state continues until the recorder mode operational button 32b is depressed.

If a decision is made at step S14 that the recorder mode operational button 32b has been depressed, while the program picture 51 is, as shown in Fig. 17, continuously displayed, the marks 53c and 53d are appended to the recorder mode image button associated with the recorder mode operational button 32b, and recorder button information 58 is displayed (step S15). At this time, facilities needed to operate the recorder are allocated to the respective channel operational buttons 31. The recorder button information 58 includes recorder image buttons arrayed in the same manner as the group of operational buttons 30 on the remote control is. The recorder image buttons are displayed together with symbols indicating how to operate the recorder 18. Thus, while the screen is being viewed, the recorder 18 can be easily operated.

In this state, a decision is made on whether any of the channel operational buttons 31 on the remote control 20 has been touched (step S16). The state is sustained until any of the channel operational buttons 31 is touched.

If a decision is made at step S16 that any of the channel operational buttons 31 has been touched, while the program picture 51 being displayed, mode button information 53, and recorder button information 58 are, as seen from the example of the screen display shown in Fig. 18, continuously displayed on the display screen 50 of the display unit 13, recorder guide information 59 ("The program recorded in the built-in HDD will be reproduced." in the illustrated example) associated with the touched channel operational button 31 is displayed (step S17). Thus, while the screen is viewed, the recorder 18 can be easily operated.

In this state, control is passed to step S18. A decision is made on whether any other channel operational button 31 has been touched. If any other channel operational button has been touched, control is returned to step S17. The mark 52d is, as shown in Fig. 19, shifted to the recorder mode image button associated with the touched channel operational button 31, and recorder guide information 59 relevant to the newly touched channel operational button 31 ("You can designate an image quality mode for recording (currently, SP). XP: high image quality, SP: standard image quality, LP: low image quality" in the illustrated example) is displayed.

In this state, a decision is made on whether any other channel operational button 31 has been touched (step S18). If a decision is made that any other channel operational button 31 has been touched, control is returned to step S17. The mark 52d is, as shown in Fig. 20, shifted to the recorder mode image button associated with the touched channel operational button 31, and recorder guide information 59 relevant to the newly touched channel operational button 31 ("The program recorded in the built-in HDD will be reproduced." in the illustrated example) is displayed.

If a decision is made at step S18 that any other channel operational button 31 has not been touched, a decision is made on whether the touched channel operational button 31 has been depressed (the sixth operational signal has been detected) (step S19). If the touched channel operational button 31 has not been depressed, control is returned to step S18. The foregoing procedure is repeated.

If a decision is made at step S18 that the touched channel operational button 31 has been depressed, a command that invokes "reproduction" that is a facility allocated to the depressed channel operational button 31 is, as shown in Fig. 21, issued. The last one of recorded programs is reproduced, and the marks 52c and 52d are appended to the recorder mode image button (step S20). Thus, a user can execute any recorder facility by performing a quite simple manipulation. Preferably, information 60 indicating the action of the recorder being under way should be displayed within the picture 51 shown in Fig. 21.

Next, a variant of the example of the screen display shown in Fig. 7 will be described in conjunction with Fig. 22. The example of the screen display shown in Fig. 22 is such that: the channel button information 52 and mode button information 53 are displayed in a large scale; and the respective descriptions of the buttons such as the broadcasting station names are displayed within the respective buttons. Consequently, channel button information can be more accurately learned.

Next, a facility that connects the broadcast receiving apparatus onto an external network such as the Internet via the network communication unit 19, makes it possible to view a picture by way of the network, and displays information by way of the network will be described with reference to Fig. 23 and Fig. 24.

For connection onto an external network such as the Internet, the Internet button 47 on the remote control 20 is depressed in order to make the Internet tact switch. The make signal is transferred to the remote-control control unit 23. In response to the make signal, the control unit 23 connects the network communication unit 19 onto the external network so that the network communication unit can communicate information over the network.

The example of the screen display shown in Fig. 23 is an example in which still images that are contained in respective contents of motion pictures available at pre-set sites are displayed. When any of the channel operational buttons 31 on the remote control 20 which bear the channel numbers 1 to 12 is touched, information 61 on the still image allocated to the position of the touched channel operational button is displayed. After the information 61 is checked, a selective manipulation can be performed.

For viewing of a picture through communication over a network, it may take some time to display the picture. When contents can be checked prior to selection of a certain content, a desired content can be selected for a short period of time.

In the example of the screen display shown in Fig. 24, homepages on the Internet that are to be linked are registered in the memory unit 12 included in the broadcast receiving apparatus 10. When any of the channel operational buttons on the remote control which bear the channel numbers 1 to 12 is touched, an image 62 that is a reduction of a homepage stored in advance in the memory unit 12 is displayed on the display unit 13. The image 62 of the homepage can be checked. For display of a homepage on the Internet, it takes some time to download various kinds of data items after accessing the uniform resource locator (URL). Compared with a case where pages are accessed one by one in order to search a desired page, pages can be efficiently checked and a desired page can be accessed. The pieces of information on the pages are periodically acquired and recorded in the memory unit included in the broadcast receiving apparatus. Consequently, when any of the operational buttons is touched, the allocated homepage can be instantaneously displayed. Incidentally, alphabets a to 1 on the channel button information 52 denote images of respective logos of the homepages.

### [Second Embodiment]

Next, a broadcast receiving apparatus 1 in accordance with the second embodiment of the present invention will be described in conjunction with Fig. 25 to Fig. 28. Fig. 25 shows the configuration of a main body of the broadcast receiving apparatus 1 in accordance with the second embodiment of the present invention. Fig. 26 to Fig. 28 show examples of screen displays on the broadcast receiving apparatus 1 in Fig. 25. The second embodiment is different from the first embodiment in a point to be described below. In the other points, the second embodiment is fundamentally identical to the first embodiment. An iterative description will be omitted.

In the second embodiment, a BS tuner 11a includes multiple tuners 11a₁ and 11a₂. A CS tuner 11b includes multiple tuners 11b₁ and 11b₂. A terrestrial digital tuner 11c includes multiple tuners 11c₁ and 11c₂.

The examples of screen displays on the second embodiment shown in Fig. 26 to Fig. 28 are equivalent to those on the first embodiment shown in Fig. 8 to Fig. 10. As apparent from the examples of screen displays shown in Fig. 26 to Fig. 28, according to the second embodiment, a program picture 63 different from a program picture 51 being displayed on the major portion of the screen is displayed within program information 54. The program picture 63 is a program picture associated with a touched channel operational button 31. For example, assuming that the program picture 51 is sampled by the tuner 11a₁, when any of the channel operational buttons 31 is touched, the tuner 11a₂ initiates sampling. A broadcast signal sampled by the tuner 11a₂ is processed and displayed as the program picture 63. The display of the program picture 63 would contribute to further improvement of user-friendliness.

## Claims

1. A broadcast receiving apparatus, comprising:
a tuner unit;
a display unit on which a program picture is displayed;
an input unit that has a plurality of channel operational buttons; and
a control unit that controls these units on a centralized manner,
wherein: when any of the channel operational buttons is touched, the input unit generates a first operational signal, and when the channel operational button is depressed, the input unit generates a second operational signal; and
when the control unit detects the first operational signal during display of the program picture on the display unit, the control unit displays, on the display unit, program information signified by the first operational signal together with the program picture; and when the control unit detects the second operational signal after detecting the first operational signal, the control unit switches the program picture being displayed to a program picture signified by the second operational signal.

2. The broadcast receiving apparatus according to Claim 1,
wherein when the control unit detects the first operational signal during display of the program picture on the entire display screen of the display unit, the control unit displays program information signified by the first operational signal on part of the program picture being displayed.

3. The broadcast receiving apparatus according to Claim 1,
wherein when the control unit detects the first operational signal, the control unit displays, on the display unit, channel button information together with the program information signified by the first operational signal.

4. The broadcast receiving apparatus according to Claim 3,
wherein: the plurality of channel operational buttons is arrayed in the form of a lattice;
the channel button information is displayed on the display unit while including channel image buttons that are arrayed in the same form of a lattice as the plurality of channel operational buttons are; and
a channel image button signified by the first operational signal and a channel image button relevant to the program picture being displayed are displayed on the display unit so that the channel image buttons can be discriminated and discerned from the other channel image buttons.

5. The broadcast receiving apparatus according to Claim 1,
wherein: the tuner unit includes a plurality of tuners that sample digital broadcasts in different broadcasting modes;
the input unit includes a plurality of broadcasting mode operational buttons associated with the plurality of tuners; when any of the broadcasting mode operational buttons is touched, the input unit generates a third operational signal; and when the broadcasting mode operational button is depressed, the input unit generates a fourth operational signal; and
when the control unit detects the third operational signal during display of a program picture of a digital broadcast sampled by the tuner unit, the control unit displays on the display unit broadcasting mode information signified by the third operational signal together with the program picture being displayed.

6. The broadcast receiving apparatus according to Claim 5,
wherein when the control unit detects the third operational signal, the control unit displays, on the display unit, mode button information, which includes a plurality of broadcasting mode image buttons associated with the plurality of broadcasting mode operational buttons, together with broadcasting mode information signified by the third operational signal.

7. The broadcast receiving apparatus according to Claim 6,
wherein: the plurality of broadcasting mode operational buttons is juxtaposed;
the mode button information is displayed on the display unit while including broadcasting mode image buttons juxtaposed in the same manner as the plurality of broadcasting mode operational buttons is; and
a broadcasting mode image button signified by the third operational signal is displayed on the display unit so that the broadcasting mode image button can be discriminated and discerned from the other image buttons.

8. The broadcast receiving apparatus according to Claim 1,
wherein: a recorder that records the program picture is included;
the input unit includes a recorder mode operational button to be used to designate a mode in which the recorder is operated; when the recorder mode operational button is touched, the input unit generates a fifth operational signal; and when the recorder mode operational button is depressed, the input unit generates a sixth operational signal; and
when the control unit detects the fifth operational signal during display of the program picture, the control unit displays, on the display unit, recorder button information together with the program picture being displayed; and when the control unit detects the sixth operational signal, the control unit allocates facilities, which are needed to operate the recorder, to the plurality of channel operational buttons, and displays on the display unit the recorder button information representing the allocated facilities.

9. The broadcast receiving apparatus according to Claim 4,
wherein: a recorder that records the program picture is included;
the input unit includes a recorder mode operational button to be used to designate a mode in which the recorder is operated; when the recorder mode operational button is touched, the input unit generates a fifth operational signal; and when the recorder mode operational button is depressed, the input unit generates a sixth operational signal; and
when the control unit detects the fifth operational signal during display of the program picture, the control unit displays on the display unit the recorder mode image button together with the program picture being displayed so that the recorder mode image button can be discriminated and discerned from the other image buttons.

10. The broadcast receiving apparatus according to Claim 1,
wherein: the tuner unit includes a first tuner and a second tuner; and
when the control unit detects the first operational signal during display of the program picture received via the first tuner, the control unit receives a program signified by the first operational signal via the second tuner, and displays the program picture received via the second tuner together with the program information signified by the first operational signal.
